(19) Europäisches Patentamt / European Patent Office / Office européen des brevets

(11) **EP 2 017 068 B1**

(12) **EUROPÄISCHE PATENTSCHRIFT**

(45) Veröffentlichungstag und Bekanntmachung des Hinweises auf die Patenterteilung:
**30.11.2011 Patentblatt 2011/48**

(51) Int Cl.:
**B29D 29/08** *(2006.01)*

(21) Anmeldenummer: **08160174.2**

(22) Anmeldetag: **11.07.2008**

(54) **Zahnriemen aus elastomerem Werkstoff und Verfahren zu seiner Herstellung**

Tooth belt made of elastomeric material and method for production of same

Courroie dentée en matière active élastomère et son procédé de fabrication

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **20.07.2007 DE 102007034411**

(43) Veröffentlichungstag der Anmeldung:
**21.01.2009 Patentblatt 2009/04**

(73) Patentinhaber: **ContiTech Antriebssysteme GmbH**
**30165 Hannover (DE)**

(72) Erfinder:
• **Unruh, Axel**
**30655 Hannover (DE)**

• **Schulte, Hermann**
**30823 Garbsen (DE)**
• **Oehl, Rainer**
**30938 Burgwedel (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
**EP-A- 1 150 034      EP-A2- 0 092 361**
**WO-A-2004/057209   DE-A1- 4 237 996**
**US-A- 1 656 628      US-A- 4 332 576**
**US-A- 6 086 809**

**Beschreibung**

Die Erfindung bezieht sich auf ein Verfahren zur Herstellung eines Zahnriemens aus elastomerem Werkstoff mit einer Rückenwelligkeit, der im Betrieb mit seiner der gezahnten Seite gegenüberliegenden Rückenseite über Umlenkrollen geführt ist sowie einen Zahnriemen aus elastomerem Werkstoff mit einer Rückenwelligkeit, der im Betrieb mit seiner der gezahnten Seite gegenüberliegenden Rückenseite über Umlenkrolle geführt ist.

Im Kfz-Motorenbau werden Zahnriemen für verschiedene Antriebsaufgaben verwendet. Zum Beispiel werden Zahnriemen für die Ventilsteuerung eingesetzt. Dabei ist der Zahnriementrieb derart ausgebildet, dass der Zahnriemen mit seiner der gezahnten Seite gegenüberliegenden Rückseite über Umlenkrollen geführt ist, um den knappen Einbauraum optimal auszunutzen.

Während der Vulkanisation des Zahnriemenrohlings entsteht eine Rückenwelligkeit, wie sie in der Figur X1 dargestellt ist. Diese Rückenwelligkeit ist darauf zurückzuführen, dass beim Vulkanisationsvorgang unter Druck elastomeres Material in die Zahnformen gedrückt wird. Im Rückenbereich der Zähne entsteht so eine starke negative Welligkeit, d.h. dass dort jeweils ein Wellental 11 in Form eines Kreisbogens entsteht.

Diese undefinierte Rückenwelligkeit erzeugt beim rückenseitigen Laufen des Zahnriemens auf Umlenkrollen, ein hohes störendes Laufgeräusch.

Nach der DE 39 26 748 C2 ist es bekannt, einen Zahnriemen 10 mit gewebefreier Rückseite, wie er in der Figur X2 dargestellt ist, nach der Vulkanisation auf der Rückseite abzuschleifen. Ein ebener Glättungsschliff, bei dem die Rückenwelligkeit = 0 mm beträgt, hat sich dabei als ungünstig erwiesen, weil aufgrund der lokalen Biegeunwilligkeit des Zahnriemens 10 im Bereich der Zahnblöcke 12 ein Polygoneffekt entsteht, der als akustisch ungünstig einzustufen ist. Der Zahnriemen 10 legt sich aufgrund seiner unterschiedlichen Blegestelfigkeiten beim Biegen um die Umlenkrolle 13 polygonartig um die kreisförmige Oberfläche der Umlenkrolle 13.

Zwar ist es nach der DE 60 2004 003 079 T2 bekannt, auch Zahnriemen mit einem Rückengewebe zu schleifen. Dieser Schliff dient jedoch dazu, die Oberfläche des Rückengewebes an sich büschelförmig aufzurauhen. Dieser Effekt wird jedoch mit herkömmlichen Schleifverfahren erzielt, die die Rückenwelligkeit nicht gezielt beeinflussen. Ein Glättungsschliff, wie er eingangs geschildert ist, wurde bei Zahnriemen mit Rückengewebe bisher nicht durchgeführt, um die Gewebefestigkeit nicht zu stark zu reduzieren.

Weitere Zahnriemen sind in der Patentschrift US 4,332,576 und der Anmeldeschrift WO 2004/057209 beschrieben.

Es wurde intern vorgeschlagen, Zahnriemen ohne Rückengewebe mit einem so genannten Feinschliff auf eine leichte negative Rückenwelligkeit zu schleifen. Dabei werden die Wellenspitzen im Bereich der Zahnlücken etwas abgeschliffen, wie beispielsweise in der Figur X3 dargestellt für Zahnriemen zum Einsatz in Riementrieben mit normal großen, üblichen Umlenkrollen der gängigsten Standardgröße (D=65 mm) auf ein Nominalmaß h von -0.03 mm und einem Toleranzbereich von -0,06 bis -0,01 mm Wellentiefe.

Dieses Abschleifen führt jedoch zu Zahnriemen, die auch weiterhin noch akustisch auffällig sind, d.h. die störenden Geräusche und Schwingungen im Riementrieb sind nicht ausreichend minimiert.

Auch ein Schleifen auf eine positive Rückenwelligkeit (Wellental im Bereich der Zahnlücken) erzeugt Polygoneffekt und hohe Geräusche.

Der Erfindung liegt die Aufgabe zugrunde, ein Verfahren zur Herstellung von Zahnriemen zu schaffen, die ein weiter verbessertes Geräusch- und Schwingungsverhalten im betrieblichen Einsatz aufweisen.

Diese Aufgabe wird dadurch gelöst, dass die Rückenwclligkeit auf ein geometrisch berechenetes, vorbestimmtes Maß geschliffen wird.

Dadurch ist ein optimales Akustikverhalten zu erzielen.

In einer Weiterbildung der Erfindung erfolgt die mathematische Ermittlung der Wellentaltiefe im Bereich der Zahnblöcke unter Zugrundelegung der Bogenhöhe des ein Kreissegment darstellenden Wellentals, der Durchmesser der Umlenkrolle, der biegesteifen Zahnfußbreite und der Zentriwinkel nach der Formel

$$B = (D/2)\ (1 - \cos \arcsin (a/D)$$

wobei bedeuten

B=Bogenhöhe eines Kreissegmentes
D=Durchmesser der Umlenkrolle
a=biegesteife Zahnfußbreite,

wobei diese Formel aus der folgenden Berechnung der Bogenhöhe B, die der Wellentaltiefe entspricht, abgeleitet ist, wobei die einzelnen Größen bedeuten

a: biegesteife Zahnfußbreite
A: Hälfte der Lückenbreite
R: Radius
a: Hälfte des Zentriwinkels (in Rad)
B: Bogenhöhe

und die Berechnung der Bogenhöhe B im Zusammenhang mit Durchmesser D (D = 2*R) und Lückenbreite a (a = 2*A) erfolgt zu:

$$B = R - \sqrt{R^2 - A^2} = R(1 - \cos\alpha) = (D/2)(1 - \cos\alpha) \tag{1}$$

$$\sin\alpha = A/R \quad \Longrightarrow \quad \alpha = \arcsin(A/R) = \arcsin(a/D) \tag{2}$$

und aus den Formeln (1) und (2) die Formel zur Berechnung der Bogenhöhe B erfolgt zu

$$B = (D/2)(1 - \cos\arcsin(a/D)) \tag{3}$$

Durch diese Vorgehensweise ist es möglich, die Welletaltiefen der Rückenwelligkeit mathematisch genau zu bestimmen.

In einer Weiterbildung der Erfindung wird die optimale Rückenwelligkeit, die das angestrebte akustische Verhalten zeigt, berechnet durch Formel

$$RW = K \times B \tag{4}$$

mit

RW= Rückenwelligkeit (Taltiefe)
B=errechnete Bogenhöhe
K=Konstante, Korrekturfaktor.

Durch den Korrkturfaktor lässt sich die Rückenwelligkeit in Toleranzbereichen festlegen, die den Anforderungen im Betrieb jeweils optimal anpassbar sind.

In einer weiteren Ausführungsform der Erfindung liegt ein günstiger Bereich für eine negative Rückenwelligkeit bei Korrekturfaktoren K zwischen

K minimum = -0,25
und
K maximum = -1,1

In einer Weiterbildung der Erfindung liegt der optimale Bereich für eine negative Rückenwelligkeit bei Korrekturfaktoren K zwischen

K minimum = -0,8
und
K maximum = -1,0

Die Erfindung ermöglicht, dass die produktionsbedingte überhöhte Rückenwelligkeit (z. b. bei Standardzahnriemen von -0,14mm) auf ein gezieltes geometrisches Maß reduziert wird, um den Polygoneffekt zu verringern und damit das akustische Verhalten zu verbessern.

Durch Herstellung einer gezielt geometrisch negativen Rückenwelligkeit wird der Polygoneffekt beim Lauf auf Umlenkrollen reduziert.

Der Erfindung liegt weiterhin die Aufgabe zugrunde, einen Zahnriemen zu schaffen, der ein weiter verbessertes Geräusch- und Schwingungsverhalten im betrieblichen Einsatz aufweist.

Diese Aufgabe wird dadurch gelöst, dass der Zahnriemen eine geschliffene Rückenwelligkeit aufweist, deren Wellentäler eine Tiefe aufweisen, die nach dem Verfahren gemäß einem der Ansprüche 2 - 5 berechnet ist.

Im Idealfall ist der Polygoneffekt beim Umlauf auf der Umlenkrolle vollständig kompensiert. Damit kann das Laufverhalten akustisch deutlich günstiger eingestellt werden. Die Rückenwelligkeit wird auf ein geometrisch berechnetes Maß geschliffen, um ein optimales Akustikverhalten zu erzielen. Die negative Rückenwelligkeit (Taltiefe) muss in diesem definierten Bereich liegen, um akustisch günstig zu wirken.

Die Erfindung ist für Zahnriemen mit und ohne Rückengewebe einsetzbar und ist von der Wahl der Zahnprofilform weitgehend unabhängig.

Anhand der Zeichnung wird nachstehend ein Beispiel der Erfindung näher erläutert. Es zeigt

Figur X1    einen Zahnriemen 10 nach dem Stand der Technik ohne Rückengewebe mit einer Rückenwelligkeit, die durch kreisbogenförmige Wellentäler 11 gebildet ist, wobei die Wellentäler 11 die den der Rückseite des Zahnriemens 10 gegenüberliegenden Zähnen 12 zugeordnet sind.

Figur X2    den Zahnriemen 10 nach dem Stand der Technik nach einem herkömmlichen Glättungsschliff,

Figur X3    den Zahnriemen 10 ohne Rückengewebe nach dem Stand der Technik nach einem gezielten Feinschliff,

Figur X4    die bekannten geometrischen Verhältnisse und Bezeichnungen zur Ermittlung der Bogenhöhe eines Kreisbogens,

Figur X5    die geometrischen Bezeichnungen der Maße eines Zahnriemens nach ISO 9010 - Tabelle 2,

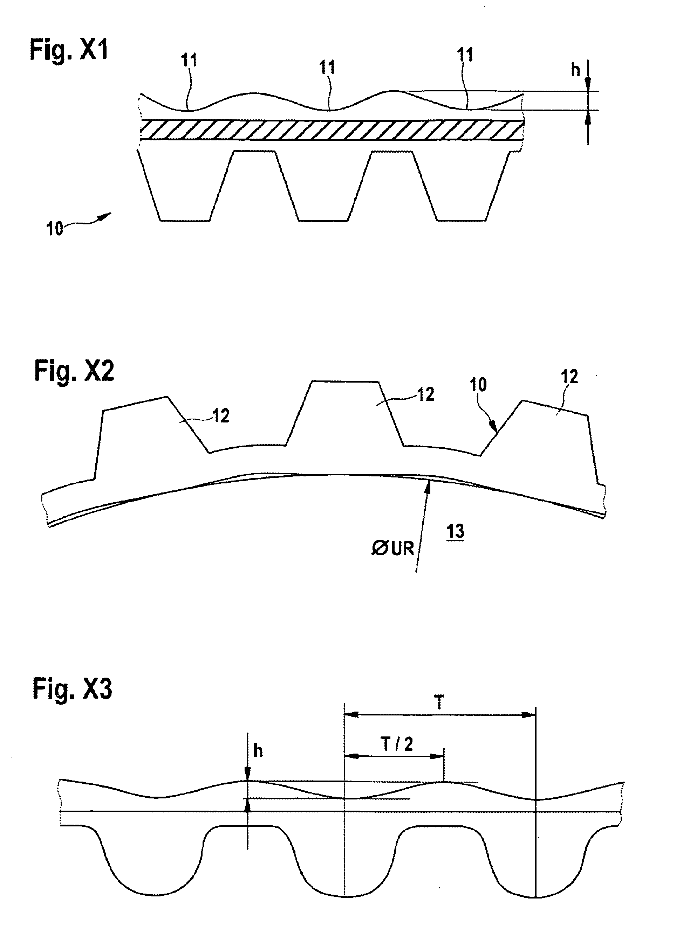

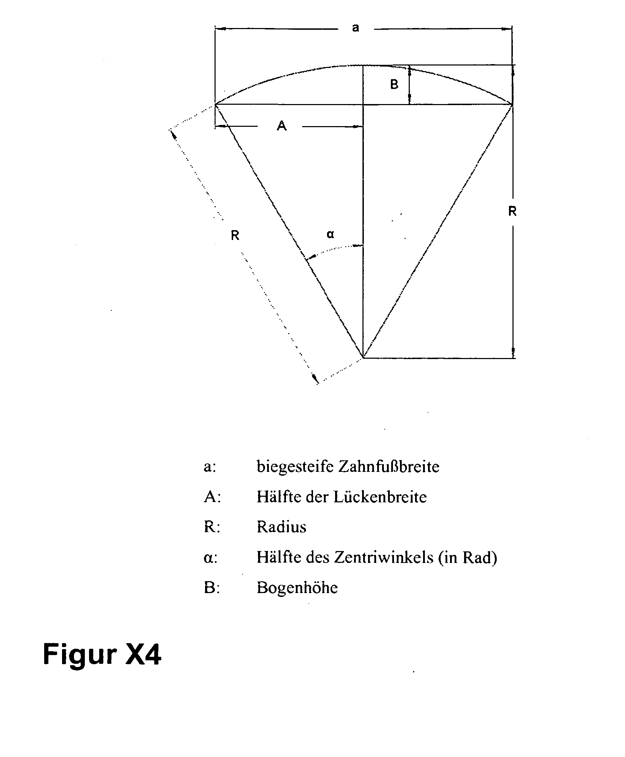

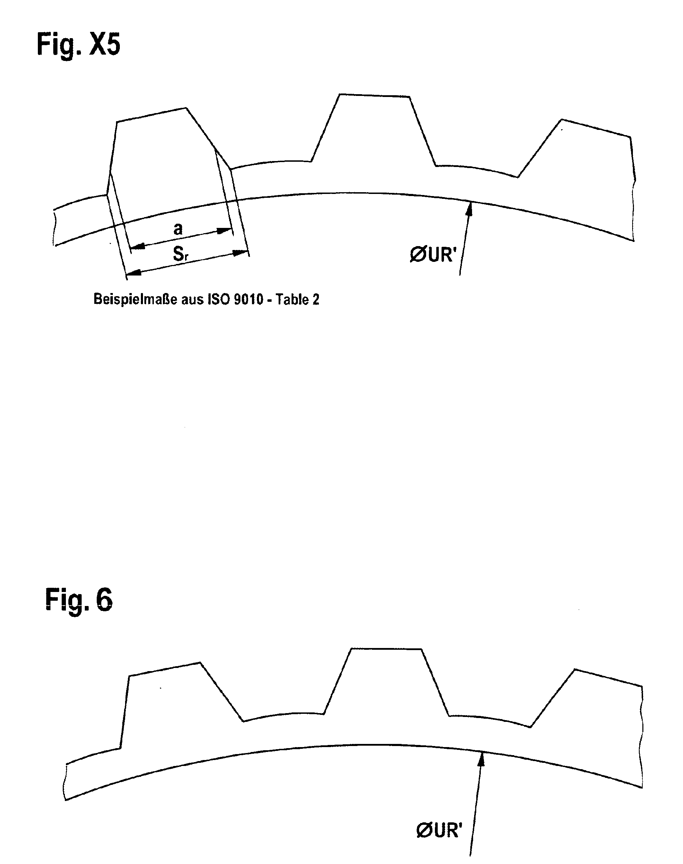

Figur 6    einen erfindungsgemäßen Zahnriemen 10 mit einer im Betriebszustand vollständig kompensierten Rückenwelligkeit.

Bei dem in Figur 6 gezeigten erfindungsgemäßen Zahnriemen 10 ist die Rückenwelligkeit auf Null reduziert. Die Eliminierung der Rückenwelligkeit erfolgte durch einen gezielten Rückenschliff, durch den in Abhängigkeit vom Riemenprofil 15, der biegesteifen Zahnfußbreite a und dem Durchmesser UR einer Umlenkrolle 13 eine vorher berechenbare Wellentaltiefe erzielbar ist, die im Betrieb sowohl die herstellbedingten Wellentäler als auch den durch die biegesteife Zahnfußbreite erzeugten Polygoneffekt vollständig ausgleicht.

Die biegesteife Zahnfußbreite a errechnet sich aus der konstruktiven nach ISO 9010 - Tabelle 2, wie es in der Figur X5 dargestellt ist.

In Tabelle 1 sind die berechenbaren Werte der Wellentaltiefe in Abhängigkeit von verschiedenen Umlenkrollen - Durchmessern und biegesteifen Zahnfußbreiten aufgelistet.

Im vorliegenden ersten Teilbeispiel handelt es sich um eine Zahnriemen mit

Riemenprofil YH (Teilung 8 mm) gemäß ISO 9010, Table 2,

biegesteifer Zahnfußbreite a = 2 x 2,11 = 4,2 mm und

Durchmesser der Umlenkrolle D= 65

Daraus ergibt sich aus Tabelle 1 eine Bogenhöhe von B= 0,068 und aus der Gleichung (4), in Verbindung mit K minimum = -0,25 und K maximum = -1,1

die untere Toleranz des zu schleifenden Wellentals zu

RW Untere Toleranz = -0.017 mm,

die obere Toleranz des zu schleifenden Wellentals zu

RW Obere Toleranz = -0.075 mm

und eine optimale Wellentaltiefe

Aufgrund von Akustikmessungen erweist sich eine Tiefe der Wellentäler der zu schleifenden Rückenwelligkeit von RW optimal= -0,061 mm als optimal.

Im zweiten Teilbeispiel handelt es sich um einen Zahnriemen mit

Riemenprofil ZH (Teilung 9.525 mm) gemäß ISO 9010, Table 2,

biegesteife Zahnfußbreite a = 2 x 2,45 = 4,9 mm und

Durchmesser der Umlenkrolle D= 65

Daraus ergibt sich unter Zugrundelegung der entsprechenden Größen analog zum ersten Teilbeispiel die Bogenhöhe zu B= 0,092 mm,

RW Untere Toleranz = -0.023 mm

RW Obere Toleranz = -0,102 mm

In diesem Fall ergaben die Akustikmessungen eine optimale Tiefe der Wellentäler der zu schleifenden Rückenwelligkeit von RW optimal = -0,083 mm

In der nachstchenden Tabelle 1 werden die für bestimmte Durchmesser der Umlenkrolle und bestimmte Zahnteilungen, aus denen die Zahnfußbreiten abgeleitet werden können, die entsprechenden Werte der jeweiligen Bogenhöhe B dargestellt.

**Berechnung der Bogenhöhe, B**

| Durchmesser der Umlenkrolle (MM) | Biegesteife Zahnfußbreite a (in mm) | | | | |
|---|---|---|---|---|---|
| | 4,2 | 4,5 | 4,9 | 5,5 | 6 |
| 20 | 0,223 | 0,256 | 0,305 | 0,386 | 0,461 |
| 25 | 0,178 | 0,204 | 0,242 | 0,306 | 0,365 |
| 30 | 0,148 | 0,170 | 0,201 | 0,254 | 0,303 |
| 35 | 0,126 | 0,145 | 0,172 | 0,217 | 0,259 |
| 40 | 0,111 | 0,127 | 0,151 | 0,190 | 0,226 |
| 45 | 0,098 | 0,113 | 0,134 | 0,169 | 0,201 |
| 50 | 0,088 | 0,101 | 0,120 | 0,152 | 0,181 |
| 55 | 0,080 | 0,092 | 0,109 | 0,138 | 0,164 |
| 60 | 0,074 | 0,084 | 0,100 | 0,126 | 0,150 |
| 65 | 0,068 | 0,078 | 0,092 | 0,117 | 0,139 |
| 70 | 0,063 | 0,072 | 0,086 | 0,108 | 0,129 |
| 75 | 0,059 | 0,068 | 0,080 | 0,101 | 0,120 |
| 80 | 0,055 | 0,063 | 0,075 | 0,095 | 0,113 |
| 85 | 0,052 | 0,060 | 0,071 | 0,089 | 0,106 |
| 90 | 0,049 | 0,056 | 0,067 | 0,084 | 0,100 |
| 95 | 0,046 | 0,053 | 0,063 | 0,080 | 0,095 |
| 100 | 0,044 | 0,051 | 0,060 | 0,076 | 0,090 |

**Bezugszeichenliste**

10   Zahnriemen

11   Wellental

12   Zähne des Zahnriemens 10

13   Umlenkrolle

15   Zahnprofil

**Patentansprüche**

1. Verfahren zur Herstellung eines Zahnriemens (10) aus elastomerem Werkstoff mit einer Rückenwelligkeit (11), der im Betrieb mit seiner der gezahnten Seite gegenüberliegenden Rückenseite über Umlenkrollen (13) geführt ist, **dadurch gekennzeichnet, dass** die Rückenwelligkeit (11) auf ein geometrisch berechnetes, vorbestimmtes Maß geschliffen wird.

**2.** Verfahren nach Anspruch 1, **dadurch gekennzeichnet, dass** die mathematische Ermittlung einer Wellentaltiefe (11) im Bereich der Zahnblöcke (12) erfolgt unter Zugrundelegung der Bogenhöhe eines ein Kreissegment darstellenden Wellentals (11), der Durchmesser der Umlenkrolle (13), der biegesteifen Zahnfußbreite und der Zentriwinkel nach der Formel

$$B= (D/2) \ ( \ 1 - \cos \arcsin (a/D)$$

wobei bedeuten
B=Bogenhöhe eines Kreissegmentes
D=Durchmesser der Umlenkrolle
a=biegesteife Zahnfußbreite,
wobei diese Formel aus der folgenden Berechnung der Bogenhöhe B, die der Wellentaltiefe entspricht, abgeleitet ist, wobei die einzelnen Größen bedeuten

a: biegesteife Zahnfußbreite
A: Hälfte der Lückenbreite
R: Radius
α: Hälfte des Zentriwinkels (in Rad)
B: Bogenhöhe

und die Berechnung der Bogenhöhe B im Zusammenhang mit Durchmesser D (D = 2*R) und Lückenbreite a (a = 2*A) erfolgt zu:

$$B = R - \sqrt{R^2 - A^2} = R(1-\cos\alpha) = (D/2)(1-\cos\alpha) \tag{1}$$

$$\sin\alpha = A/R \Longrightarrow \qquad \alpha = \arcsin(A/R) = \arcsin(a/D) \tag{2}$$

und aus den Formeln (1) und (2) die Formel zur Berechnung der Bogenhöhe B erfolgt zu

$$B = (D/2)(1-\cos\arcsin(a/D)) \tag{3}$$

**3.** Verfahren nach Anspruch 1 oder 2, **dadurch gekennzeichnet, dass** die optimale Rückenwelligkeit (11), die das angestrebte akustische Verhalten zeigt, berechnet wird durch Formel

$$RW = K \times B \tag{4}$$

mit
RW= Rückenwelligkeit (Taltiefe)
B=errechnete Bogenhöhe
K=Konstante, Korrekturfaktor.

**4.** Verfahren nach Anspruch 3, **dadurch gekennzeichnet, dass** ein günstiger Bereich für eine negative Rückenwelligkeit (11) bei Korrekturfaktoren K zwischen
K minimum = -0,25
und
K maximum = - 1,1
liegt.

5. Verfahren nach Anspruch 4, **dadurch gekennzeichnet, dass** ein günstiger Bereich für eine negative Rückenwelligkeit bei Korrekturfaktoren K zwischen
K minimum = -0,8
und
K maximum = -1,0
liegt.

6. Zahnriemen (10) aus elastomerem Werkstoff mit einer geschliffenen Rückenwelligkeit (11), der im Betrieb mit seiner der gezahnten Seite gegenüberliegenden Rückenseite über Umlenkrollen (13) geführt ist,
**dadurch gekennzeichnet, dass** der Zahnriemen (10) eine Rückenwelligkeit (11) aufweist, deren Wellentäler eine Tiefe aufweisen, die berechnet ist unter Zugrundelegung

   - der Bogenhöhe B eines ein Kreissegment darstellenden Wellentals (11),
   - des Durchmessers der Umlenkrolle D (13) und
   - der biegesteifen Zahnfußbreite a nach der Formel

$$B = (D/2) \ (1 - \cos \arcsin (a/D)$$

7. Zahnriemen (10) nach Anspruch 6, **dadurch gekennzeichnet, dass** die optimale Rückenwelligkeit (11), die das angestrebte akustische Verhalten zeigt, berechnet ist durch Formel

$$RW = K \ x \ B$$

mit
RW= Rückenwelligkeit (Taltiefe)
B=errechnete Bogenhöhe
K=Konstante, Korrekturfaktor.

8. Zahnriemen (10) nach Anspruch 7, **dadurch gekennzeichnet**, der Korrekturfaktor K zwischen
K minimum = -0,25
und
K maximum = -1,1
liegt.

9. Zahnriemen (10) nach Anspruch 7, **dadurch gekennzeichnet, dass** der Korrekturfaktor K zwischen
K minimum = -0.8
und
K maximum = -1,0
liegt.

**Claims**

1. Method for producing a toothed belt (10), made from an elastomeric material and having a back waviness (11), which is guided during operation over deflecting rollers (13) with its rear side opposite the toothed side, **characterized in that** the back waviness (11) is ground to a geometrically calculated, predetermined extent.

2. Method according to Claim 1, **characterized in that** the mathematical determination of a wave valley depth (11) is performed in the region of the toothed blocks (12) on the basis of the curve height of a wave valley (11) representing a circular segment, the diameter of the deflecting roller (13), the flexurally rigid tooth root width and the central angle, according to the formula

$$B = (D/2) \ (1 - \cos \arcsin (a/D)$$

where
B signifies the curve height of a circular segment
D signifies the diameter of the deflecting roller, and
a signifies the flexurally rigid tooth root width,
this formula being derived from the following calculation of the curve height B, which corresponds to the wave valley depth, the individual variables signifying

a: flexurally rigid tooth root width
A: half the gap width
R: radius
$\alpha$: half the central angle (in radians), and
B: curve height

and the calculation of the curve height B being yielded in conjunction with diameter D (D = 2*R) and gap width a (a = 2*A) as:

$$B = R - \sqrt{R^2 - A^2} = R(1 - \cos\alpha) = (D/2)(1 - \cos\alpha) \tag{1}$$

$$\sin\alpha = A/R \Longrightarrow \qquad \alpha = \arcsin(A/R) = \arcsin(a/D) \tag{2}$$

and the formula for calculating the curve height B resulting from the formulae (1) and (2) as

$$B = (D/2)(1 - \cos\arcsin(a/D)) \tag{3}$$

3. Method according to Claim 1 or 2, **characterized in that** the optimum back waviness (11) which exhibits the wanted acoustic behaviour is calculated by the formula

$$RW = K \times B \tag{4}$$

where
RW = back waviness (valley depth)
B = computed curve height
K = constant, correction factor.

4. Method according to Claim 3, **characterized in that** for correction factors K an advantageous range for a negative back waviness (11) lies between
K minimum = -0.25
and
K maximum = -1.1.

5. Method according to Claim 4, **characterized in that** for correction factors K an advantageous range for a negative back waviness lies between
K minimum = -0.8
and
K maximum = -1.0.

6. Toothed belt (10) made from an elastomeric material and having a ground back waviness (11), which is guided during operation over deflecting rollers (13) with its rear side opposite the toothed side, **characterized in that** the toothed belt (10) exhibits a back waviness (11) the wave valleys of which exhibit a depth which is calculated on the basis of

- the curve height B of a wave valley (11) representing a circular segment,
- the diameter of the deflecting roller D (13), and
- the flexurally rigid tooth root width a according to the formula

$$B = (D/2) (1 - \cos \arcsin (a/D).$$

7. Toothed belt (10) according to Claim 6, **characterized in that** the optimum back waviness (11) which exhibits the wanted acoustic behaviour is calculated by the formula

$$RW = K \times B$$

where
RW = back waviness (valley depth)
B = computed curve height K = constant, correction factor.

8. Toothed belt (10) according to Claim 7, **characterized in that** the correction factor K lies between
K minimum = -0.25
and
K maximum = -1.1.

9. Toothed belt (10) according to Claim 7, **characterized in that** the correction factor K lies between
K minimum = -0.8
and
K maximum = -1.0.

**Revendications**

1. Procédé de fabrication d'une courroie dentée (10) en matériau élastomère, dotée d'une ondulation de dos (11) guidée en fonctionnement sur des rouleaux de renvoi (13) par son côté dorsal opposé au côté denté, **caractérisé en ce que**
l'ondulation dorsale (11) est meulée à une dimension prédéterminée, calculée géométriquement.

2. Procédé selon la revendication 1, **caractérisé en ce que** la détermination mathématique d'une profondeur (11) des creux des ondulations au niveau des blocs (12) de dents s'effectue sur base de la hauteur de l'arc d'un creux d'ondulation (11) qui représente un segment de cercle, du diamètre du rouleau de renvoi (13), de la largeur rigide en flexion du pied des dents et de l'angle de centrage selon la formule :

$$B = (D/2) (1 - \cos \arcsin (a/D)$$

dans laquelle
B = hauteur de l'arc du segment de cercle
D = diamètre du rouleau de renvoi
a = largeur rigide en flexion du pied des dents,
cette formule étant dérivée du calcul ci-dessous de la hauteur B de l'arc qui correspond à la profondeur des creux des ondulations, avec pour les différentes grandeurs :

  a : largeur rigide en flexion du pied des dents
  A : moitié de la largeur des trous,
  R : rayon
  $\alpha$ : moitié de l'angle de centrage (dans la roue)
  B : hauteur de l'arc,
  le calcul de la hauteur d'arc B conjointement avec le diamètre D (D = 2*R) et de la largeur a des trous (a = 2*A) s'effectuant de la façon suivante :

$$B = R - \sqrt{R^2 - A^2} = R(1 - \cos\alpha) = (D/2)(1 - \cos\alpha) \qquad (1)$$

$$\sin\alpha = A/R \Longrightarrow \qquad\qquad \alpha = \arcsin(A/R) = \arcsin(a/D) \qquad (2)$$

et la formule de calcul de la hauteur B de l'arc s'effectuant à partir des formules (1) et (2) par :

$$B = (D/2)(1 - \cos\arcsin(a/D)) \qquad (3)$$

**3.** Procédé selon les revendications 1 ou 2 , **caractérisé en ce que** l'ondulation dorsale maximale (11) qui présente le comportement acoustique souhaité est calculée par la formule :

```
RW = K x B                                    (4)
```

dans laquelle
RW = ondulation dorsale (profondeur des creux)
B = hauteur calculée de l'arc et
K = constante, facteur de correction.

**4.** Procédé selon la revendication 3, **caractérisé en ce qu'**une plage favorable d'une ondulation dorsale négative (11) correspond à des facteurs de correction K compris entre
K minimum = -0,25 et
K maximum = -1,1.

**5.** Procédé selon la revendication 4, **caractérisé en ce qu'**une plage favorable d'une ondulation dorsale négative correspond à des facteurs de correction K compris entre :

K minimum = -0,8 et
K maximum = -1,0.

**6.** Courroie dentée (10) en matériau élastomère et dotée d'une ondulation dorsale meulée (11) qui, en fonctionnement, est guidée sur des rouleaux de renvoi (13) par son côté dorsal opposé au côté denté, **caractérisée en ce que** la courroie dentée (10) présente une ondulation dorsale (11) dont les creux d'ondulation présentent une profondeur calculée sur base de :

- la hauteur B de l'arc d'un creux d'ondulation (11) correspond à un segment de cercle,
- le diamètre D du rouleau d'envoi (13) et
- la largeur a rigide en flexion du pied des dents, selon la formule :

```
B = (D/2) (1 - cos arcsin (a/D).
```

**7.** Courroie dentée (10) selon la revendication 6, **caractérisée en ce que** l'ondulation dorsale optimale (11) qui indique le comportement acoustique souhaité, est calculée par la formule :

```
RW = K x B
```

dans laquelle
RW = ondulation dorsale (profondeur des creux)

B = hauteur calculée de l'arc et

K = constante, facteur de correction.

**8.** Courroie dentée (10) selon la revendication 7, **caractérisée en ce que** le facteur de correction K est situé entre

K minimum = -0,25 et

K maximum = -1,1.

**9.** Courroie dentée (10) selon la revendication 7, **caractérisée en ce que** le facteur de correction K est situé entre

K minimum = -0,8 et

K maximum = -1,0.

**Fig. X1**

11     11     11

h

10

**Fig. X2**

12     12     10     12

ØUR    13

**Fig. X3**

T

h    T / 2

| a: | biegesteife Zahnfußbreite |
| A: | Hälfte der Lückenbreite |
| R: | Radius |
| α: | Hälfte des Zentriwinkels (in Rad) |
| B: | Bogenhöhe |

# Figur X4

## Fig. X5

Beispielmaße aus ISO 9010 - Table 2

## Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3926748 C2

- DE 602004003079 T2